# EUROPEAN PATENT APPLICATION

(11) **EP 1 850 175 A1**
(43) Date of publication of application: **31.10.2007**
(21) Application number: 06713123.5
(22) Date of filing: 06.02.2006
(51) Int. Cl.: G03B 21/58

(54) **SELF-STANDING LIFTING SCREEN**

(30) Priority: 10.02.2005 JP 2005033753; 14.09.2005 JP 2005267049
(71) Applicant: Os Mfg Co., Ltd., Yamazaki-cho Shiso-shi Hyogo 671-2513 (JP)
(72) Inventor: KOTERA, Masayuki, ho, Shiso-shi, Hyogo 6712513 (JP); OKUMURA, Masayuki, ho, Shiso-shi, Hyogo 6712513 (JP)
(74) Representative: Vossius & Partner
(86) International application number: PCT/JP2006/301980
(87) International publication number: WO 2006/085505

(57) **Abstract**

To provide a self-standing elevating screen capable of disposing the casing as close to the wall surface as possible, while achieving reduction of the number of parts.

A casing is configured so as to be freely changed between an unused position in which a rear surface of the casing contacts with a floor surface to allow the casing to stand up vertically, and a horizontally-used position in which a bottom surface of the casing contacts with the floor surface to allow the screen to stand up, a handle which protrudes forward from a front surface of the casing in the horizontally-used position is provided, and a contact portion, which can contact with the floor surface when the bottom surface of the casing is in contact with the floor surface, is provided in the handle.

## Description

### BACKGROUND OF THE INVENTION

### 1. Field of the Invention

The present invention relates to a self-standing elevating screen which is configured so as to be able to lift an upper end supporting member by hand or using an actuator such as an electric motor, thereby extending a screen upward, pushing down the upper end supporting member downward, and rolling up and storing in a casing the screen extended by the force of the actuator to carry the screen.

### 2. Description of the Related Art

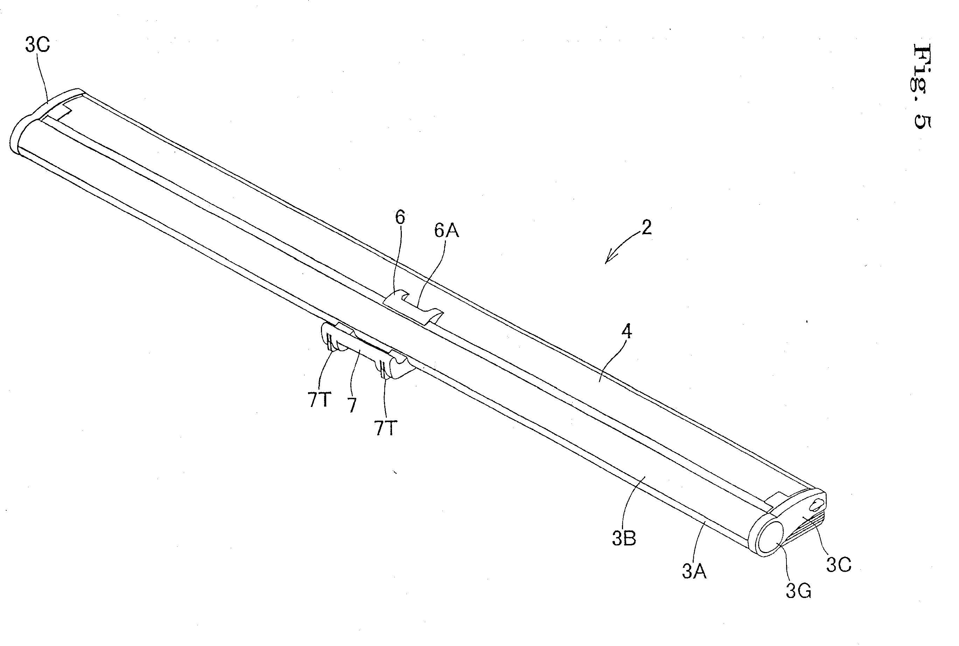

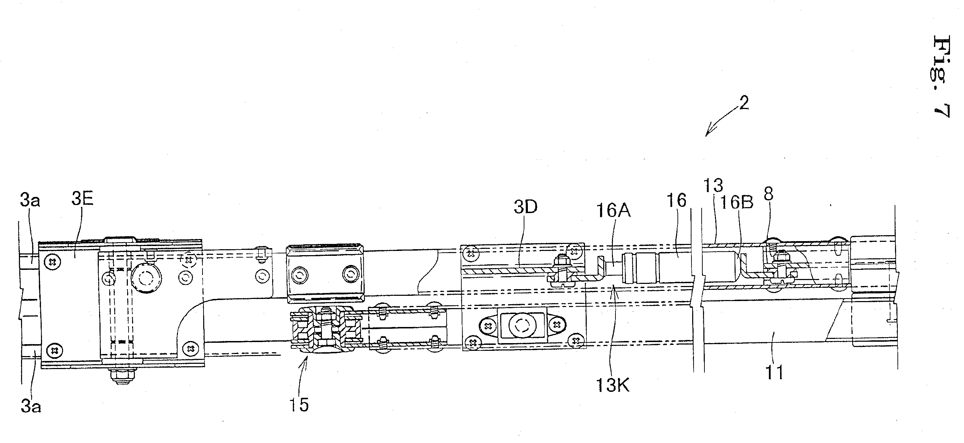

In the abovementioned self-standing elevating screen, for example, the upper end supporting member in which the upper ends of the screen are coupled to each other and a base member provided inside the casing are pivotally coupled to each other in a state in which a telescopic linkage, which is configured by pivotally coupling an upper portion side arm and a lower portion side arm, is distributed to the right and left of the self-standing elevating screen, the pivotally coupled portion in which the upper portion side arm in the form of a polygonal cylinder and disposed on the left side and the lower portion side arm in the form of a polygonal cylinder and disposed on the same side is disposed on the right side with respect to the center portion in a horizontal direction of the upper end supporting member, the pivotally coupled portion in which the upper portion side arm disposed on the right side and the lower portion side arm disposed on the same side is disposed on the left side with respect to the center portion in a horizontal direction of the upper end supporting member, a gas spring, which is biasing means for moving and biasing the lower portion side arm upward, is provided between the lower portion side arm and the base member, and the screen is rolled up around a reel member of the casing, whereby the upper portion side arm and the lower portion side arm can be folded up in a vertical direction and stored. In order to prevent the standing screen from falling over, rectangular leg portions, which are longer than the front-to-back length of the of the casing, are rotatably attached to two specific sections on the lower surface of the casing, and, when allowing the screen to stand up, the right and left pair of leg portions are rotated and switched to a supporting position for protruding to the front and back of the casing (see, for example, the pamphlet of International Publication No. 03/100519 (see Fig. 5 and Fig. 7)).

According to the pamphlet of International Publication No. 03/100519, extra right and left pairs of leg portions are required, whereby the number of parts are increased, causing disadvantages in terms of the cost and the assembling work.

Further, the screen is configured such that the leg portions protrude in the front-to-back direction of the casing, excess dead space is created between a rear surface of the casing and a wall surface by the amount of protrusion of the leg portion protruding from the casing to the back, whereby the casing cannot be disposed as close to the wall surface as possible, and there was a room for improvement.

A problem to be solved by the present invention in view of such circumstances is to provide a self-standing elevating screen capable of disposing the casing as close to the wall surface as possible, while achieving reduction of the number of parts.

### SUMMARY OF THE INVENTION

In order to solve the abovementioned problem, the present invention configures a self-standing elevating screen, wherein a reel member for rolling up and storing a screen which stands up is disposed in a front side space of spaces formed in the casing, a telescopic linkage, which is used for pivotally coupling upper end supporting member in which upper ends of the screen are coupled to each other and a base member provided inside the casing, is disposed in a back side space of the spaces formed inside the casing so as to be freely folded up and stored, the casing being configured so as to be freely changed between an unused position in which a rear surface of the casing contacts with a floor surface to allow the casing to stand up vertically, and a horizontally-used position in which a bottom surface of the casing contacts with the floor surface to allow the screen to stand up, a handle which protrudes forward from a front surface of the casing in the horizontally-used position is provided, and a contact portion, which can contact with the floor surface when the bottom surface of the casing is in contact with the floor surface, is provided in the handle.

As described above, a contact portion, which contacts with the floor surface at the front side of the casing, is provided in the handle which protrudes forward from a front surface of the casing in the horizontally-used position. Accordingly, the screen can be reliably prevented from being falling over in a state in which the screen is allowed to stand up. Further, by combining the handle and the contact portion, the number of parts can be prevented from being increased. Since the handle protrudes only toward the front, the rear surface of the casing can be disposed as close to the wall surface of the casing as possible. When the screen is not used, the casing can be switched to the unused position in which the rear surface of the casing contacts with the floor surface to allow the casing to stand up vertically, and the casing can be set upright on the floor surface not to cause an obstruction as much as possible, if the front-to-back length of the casing is longer than the vertical length of the casing. In the case of this unused position, the handle is directed upward, thus a hand can be easily put on the handle and the self-standing elevating screen can be moved promptly.

The reel member may be biased in order to rolling up the screen, the telescopic linkage may be configured such that a top and bottom pair of links, which are configured by pivotally coupling a lower end of an upper portion side arm pivotally coupled to the upper end supporting member and an upper end of a lower portion side arm pivotally coupled to the base member, are distributed to the right and left of the self-standing elevating screen, a pivotally coupled portion of the lower portion side arm disposed on the same side as the upper portion side arm on the left side may be disposed on a right side with respect to the center portion in a horizontal direction of the upper end supporting member, a pivotally coupled portion of the lower portion side arm disposed on the same side as the upper portion side arm on the right side may be disposed on a left side with respect the center portion in a horizontal direction of the upper end supporting member, biasing means for moving and biasing the lower portion side arm upward may be provided between the lower portion side arm and the base member, the lower portion side arm may be configured such that the cross-sectional shape thereof, in which a lower surface thereof positioned on a lower side when the upper portion side arm and the lower portion side arm are folded up and stored in a vertical direction is opened, is in the shape of substantially a reversed "C" or in the shape of substantially a reversed "L", and the biasing means may be disposed such that at least a part of the biasing means enters the space inside the lower portion side arm in a state in which the lower portion side arm is stored, and such that the part of the biasing means overlaps with an upper and lower plate portions of the lower portion side arm when viewed in the horizontal direction.

A gas spring may be used as the biasing means.

The contact portion may be formed integrally with the handle.

The handle may be provided in substantially the center of the casing in a traverse direction.

An opening through which the screen and the linkage enter and exit may be formed in the casing, and a lid member for closing the opening may be configured by the upper end supporting member.

The casing may be provided with a latching and holding member for closing the upper end supporting member serving as the lid member, so as to be latched with a latching portion of the upper end supporting member to hold the lid-closed position of the upper end supporting member.

The latching portion of the upper end supporting member may comprise a pair of protruding pieces protruding so as to face each other in substantially the horizontal direction, the latching and holding member may comprise a main body portion fixed to the casing and a pair of latching pieces movably provided on a side for approaching the main body portion, and the pair of latching pieces may be provided with latching nails, which contact with the protruding pieces when the upper end supporting member is changed to the lid-closed position and move the pair of latching pieces to the side for approaching, return the pair of latching pieces to a side for separating and latch the protruding pieces so as to stop the vertical movement of the protruding pieces by means of release of the contact, which is caused by passage of the protruding piece, and further move the pair of latching pieces to the side for approaching when an upper part of the upper end supporting member, which is latched and held onto the lid-closed position, is changed to a lid-released position, and taper toward end portions which are opposite to the side for approaching, so as to release the latching with the protruding pieces.

The contact portion, which contacts with the floor surface at the front side of the casing, is provided in the handle which protrudes forward from a front surface of the casing in the horizontally-used position. Accordingly, it is possible to provide the self-standirig elevating screen which can achieve reduction of the number of parts, and at the same time dispose the casing as close to the wall surface as possible. When the screen is not used, the casing can be switched to the unused position in which the rear surface of the casing contacts with the floor surface to allow the casing to stand up vertically, and the casing can be set upright on the floor surface not to cause an obstruction as much as possible, if the front-to-back length of the casing is longer than the vertical length of the casing, whereby an improved self-standing elevating screen can be produced. In the case of this unused position, the handle is directed upward, thus there is an advantage that a hand can be easily put on the handle and the self-standing elevating screen cab be moved promptly.

By configuring the lower portion side arm so that the cross-sectional shape thereof is in the shape of substantially a reversed "C" or in the shape of substantially a reversed "L", a part or the whole of the space inside the stored lower portion side arm can be used as a space for disposing the biasing means, whereby the storage space in the vertical direction inside the casing can be reduced. By lowering the center of gravity, the stability can be further enhanced, and the screen can be reliably prevented from falling over.

A gas spring is suitable as the biasing means.

Furthermore, integral formation of the contact portion on the handle is advantageous in terms of the cost and the assembling work since the number of parts can be reduced, in comparison with the case in which different members are attached to the handle.

Moreover, by providing the handle in substantially the center of the casing in a traverse direction, the front part of the casing in which the handle is not protruding can be used as other space.

An opening through which the screen and the linkage enter and exit is formed on the casing, and the lid member for closing the opening is configured by the upper end supporting member, whereby reduction of the number of parts can be achieved, and it is advantageous in terms of operability since it is only necessary to lift up the upper end supporting member, although in the case in which the lid member is provided independently from the upper end supporting member, two operations need to be performed, that is, the lid member has to be removed first, and then the upper end supporting member has to be lifted up.

The casing may be provided with a latching and holding member for closing the upper end supporting member serving as the lid member, so as to be latched with a latching portion of the upper end supporting member to hold the lid-closed position of the upper end supporting member. Accordingly, simply by moving the upper end supporting member downward, the latching and holding member can be latched with the latching portion of the upper end supporting member, and the upper end supporting member can be held in the lid-closed position. Specifically, simplification and speeding-up of the operation can be achieved, compared to a case in which, for example, holding means is provided separately and operated in a state where the upper end supporting member is applied and held by hand, to hold the upper end supporting member.

The latching portion of the upper end supporting member may comprise a pair of protruding pieces protruding so as to face each other in substantially the horizontal direction, the latching and holding member may comprise a main body portion fixed to the casing and a pair of latching pieces movably provided on a side for approaching the main body portion, and the pair of latching pieces may be provided with a latching nails, which contact with the protruding pieces when the upper end supporting member is changed to the lid-closed position and move the pair of latching pieces to the side for approaching, return the pair of latching pieces to a side for separating and latch the protruding pieces so as to stop the vertical movement of the protruding pieces by means of release of the contact, which is caused by passage of the protruding piece, and further move the pair of latching pieces to the side for approaching when an upper part of the upper end supporting member, which is latched and held onto the lid-closed position, is changed to a lid-released position, and taper toward end portions which are opposite to the side for approaching, so as to release the latching with the protruding pieces. Accordingly, simply by performing a lifting-up and lowering operation of the lid member, latching of the pair of protruding pieces onto the pair of latching pieces can be performed or released, whereby the operability can be improved, compared to the configuration in which, for example, latching and releasing are performed independently from the lifting-up and lowering operation of the lid member.

### BRIEF DESCRIPTION OF THE DRAWINGS

Fig. 1 is a front view of the elevating screen in which the screen is standing up;
Fig. 2 is a rear view of the elevating screen in which the screen is standing up;
Fig. 3 is a side view showing a partial cross-section of the elevating screen in which the screen is standing up;
Fig. 4 is a figure of a longitudinal section of the elevating screen in which the screen is rolled up;
Fig. 5 is a perspective view of the elevating screen in which the screen is rolled up;
Fig. 6 is a figure of a longitudinal section showing a portion for attaching the gas spring;
Fig. 7 is a cross-sectional view showing the portion for attaching the gas spring;
Fig. 8A is a side view of the elevating screen, which shows a state of immediately before allowing the screen to stand up after allowing the bottom surface of the casing to contact with the floor surface;
Fig. 8B is a side view of the elevating screen showing a state in which a back surface of the casing is allowed to contact the floor surface to allow the screen to stand up;
Fig. 9 is a rear view of a longitudinal cross-section, which shows a substantial part of a portion for attaching the latching and holding member;
Fig. 10 is a side view of the longitudinal cross-section, which shows the substantial part of a portion for attaching the latching and holding member;
Fig. 11 is a perspective view of the substantial part of a portion for attaching the latching and holding member;
Fig. 12 is a side view of the longitudinal cross-section, which shows a substantial part obtained by cutting the pivotally coupled portion between the upper portion side arm and the lower portion side arm;
Fig. 13 is a side view of a longitudinal cross-section of the elevating screen obtained by cutting a section for attaching a slide member;
Fig. 14 is a rear view of the elevating screen in which the slide member is attached to the both upper and lower arms;
Fig. 15 is a rear view of a substantial part in which the slide member is attached to the both upper and lower arms; and

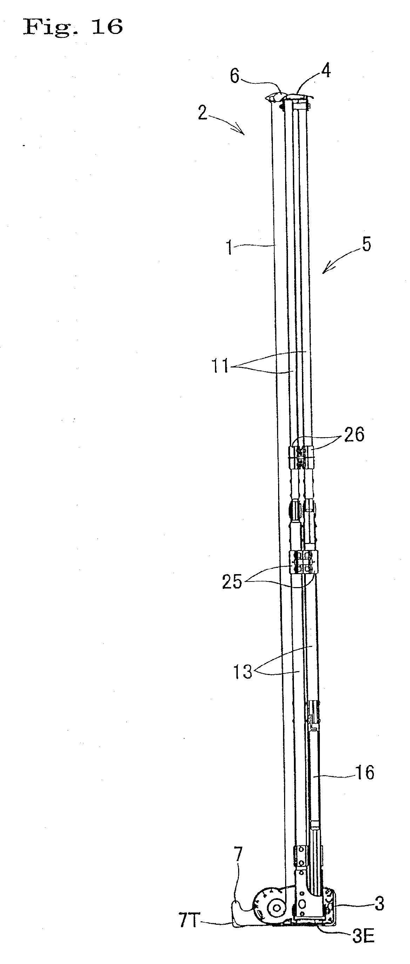

Fig. 16 is a side view of a longitudinal cross-section of the elevating screen in which the slide member is attached to the both upper and lower arms.

### DESCRIPTION OF THE PREFERRED EMBODIMENTS

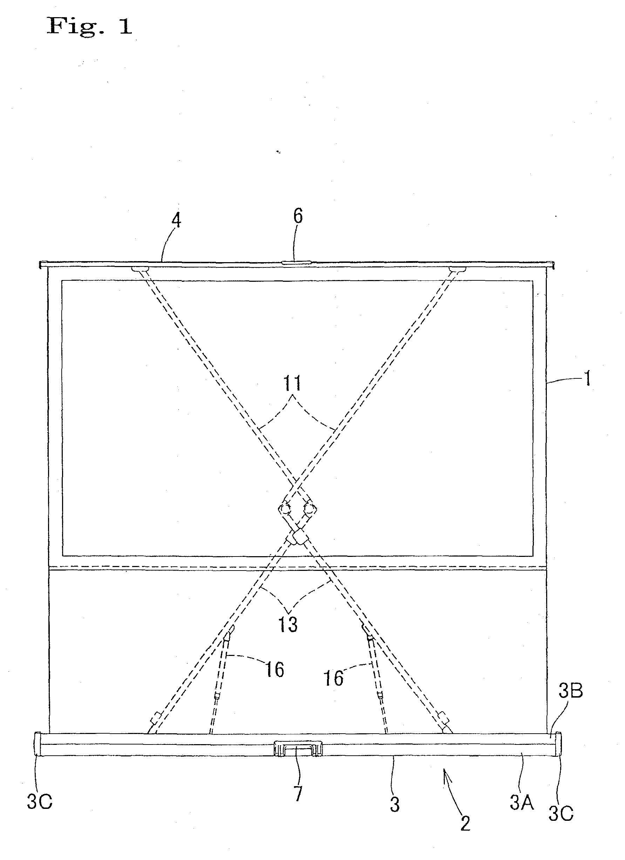

Fig. 1 through Fig. 5 show a carriageable, light and small (portable type) self-standing elevating screen (referred to as "elevating screen" hereinafter) 2 which has a screen (may have the size (dimension) which is not shown in the figures) 1 stored therein. In the description hereinafter, the longitudinal direction (screen width direction) of a casing 3 for storing the elevating screen 2 shown in Fig. 1 is the traverse direction, and the direction perpendicular to the longitudinal direction (screen width direction) of the casing 3 is the front-to-back direction. The elevating screen 2 comprises the casing 3 for rolling up and storing the screen 1, and a telescopic linkage 5 which is disposed on a back (rear) surface side of the screen 1 and in which upper ends are pivotally coupled to both right and left end portions of an upper end supporting member 4 in which upper ends of the screen 1 are coupled to each other, thereby forming an X shape in the linkage 5. Here, a configuration in which the screen 1 is allowed to stand up or rolled up by manual force is shown, but the screen 1 may be operated by means of force of an actuator such as an electric motor.

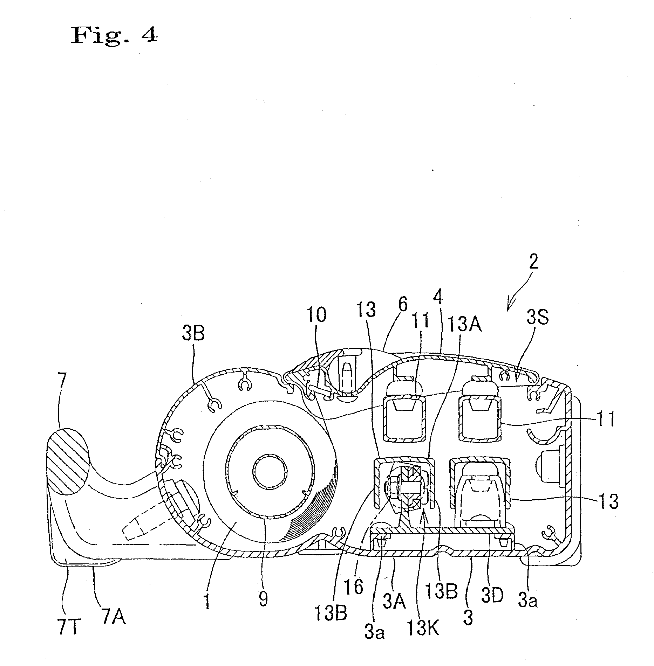

The upper end supporting member 4 is combined with a lid member whose cross-sectional shape is convex upward so as to close an opening 3S which is formed in the casing 3 and through which the screen 1 and the linkage 5 enter and exit with respect to the casing 3. A pinch portion 6 in which a notch 6A is formed is screwed with a nut, the notch 6A being pulled up by inserting a finger in substantially the center portion in the traverse direction of the upper end supporting member 4 and latching the fingertip on a concave portion of the upper end supporting member 4. By pinching and pulling up the pinch portion 6, the screen 1 can be allowed to stand up to be in the used position, as shown in Fig. 1 through Fig. 3, and further the screen 1 can be rolled up and stored in the casing 3 and an upper portion side arm 11 and a lower portion side arm 13 of the linkage 5 can be folded up and stored in the vertical direction, as shown in Fig. 4 and Fig. 5. The pinch portion 6 can be combined with the upper end supporting member 4 for implementation.

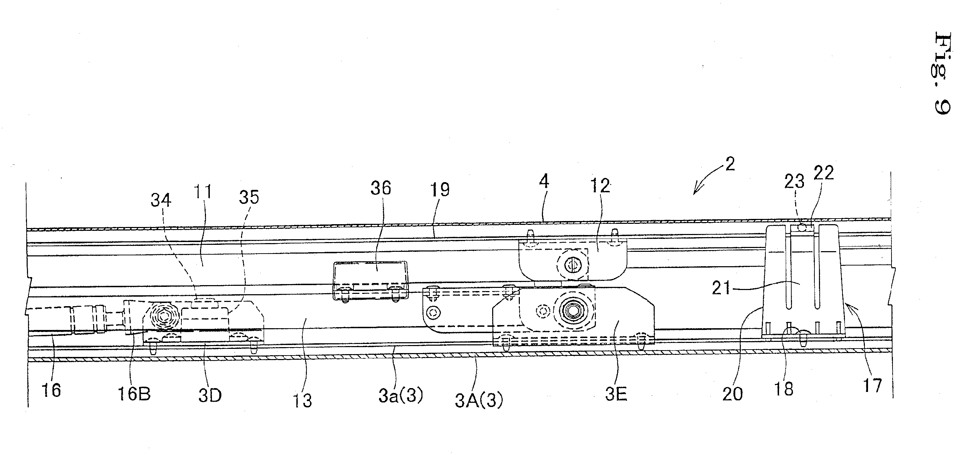

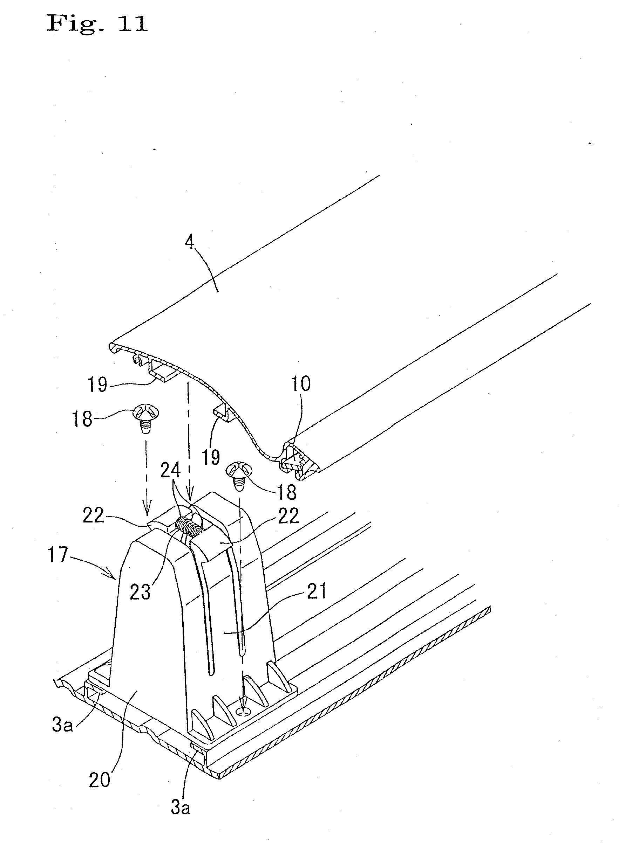

As shown in Fig. 9 through Fig. 11, there are disposed on the right and left side of the casing 3 two latching and holding members 17 made of synthetic resin and having substantially a trapezoidal shape when viewed from the side, which closes the upper end supporting member 4 which is the lid member, and thereby latching the latching and holding members onto a latching portion of the upper end supporting member 4 and holding a lid-closed position of the upper end supporting member 4. Specifically, the latching and holding member 17 are bridged between upper surfaces of a front and back pair of protruding portions 3a, 3a having the shape of a hook and protruding upward throughout the entire casing 3 in substantially the longitudinal direction from a base member 3A described hereinafter, and are fixed with two screws 18, 18. Here, the latching and holding members 17 are configured with synthetic resin in order to make the latching and holding members 17 light, but they may be configured with wood or metal. Moreover, one latching and holding member 17 can be provided or at least three of them can be provided for implementation.

The latching portion of the upper end supporting member 4 comprises a pair of protruding pieces 19, 19 having the shape of a hook and protruding so as to face each other in substantially a horizontal direction. The latching and holding member 17 comprises a main body portion 20 fixed to the casing 3 and a pair of vertically long latching pieces 21, 21 movably provided on a side for approaching the main body portion 20, and the pair of latching pieces 21, 21 are provided with latching nails 22, which contact with the protruding pieces 19, 19 when the upper end supporting member 4 is changed to the lid-closed position and move the pair of latching pieces 21, 21 to the side for approaching, return the pair of latching pieces 21, 21 to a side for separating and latches the protruding pieces 19, 19 so as to stop the vertical movement of the protruding pieces 19, 19 by means of release of the contact, which is caused by passage of the protruding piece 19, 19, and further move the pair of latching pieces 21, 21 to the side for approaching when an upper part of the upper end supporting member 4, which is latched and held onto the lid-closed position, is changed to a lid-released position, and taper toward end portions which are opposite to the side for approaching, so as to release the latching with the protruding pieces 19, 19, the latching nails 22 being in the form of a mound when viewed from the side and used for contacting operation. A circular protrusion 24 for latching and holding a coil spring 23 is provided on each of side ends approached by the latching pieces 21, 21. Here, the latching pieces 21, 21, are reliably returned by using the coil spring 23, but a plate spring may be used instead. Alternatively, the latching pieces 21, 21 themselves may be configured as the plate spring instead of omitting the use of the coil spring 23 or plate spring. By configuring the latching pieces 21, 21 from a component which can freely swing around a lower end portion, there is an advantage that the configuration can be simplified. However, the latching pieces 21, 21 may be provided slidably (movably), with a guide member (not shown) therebetween, so as to approach or separate from each other.

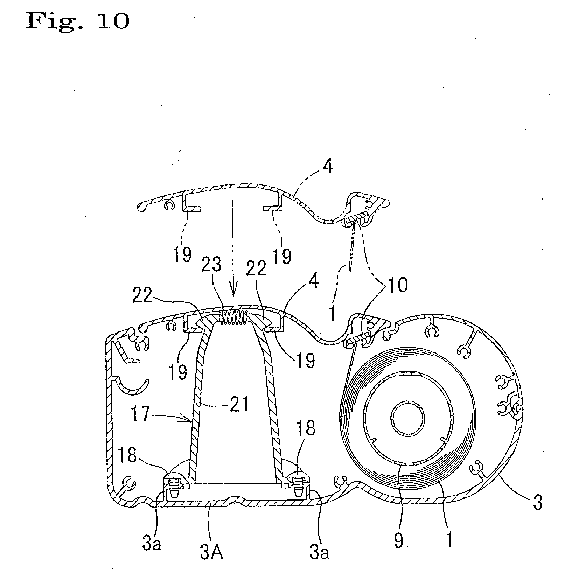

Therefore, due to the change of the positions of the upper section of the upper end supporting member 4 between the lid-released position and the lid-closed position, lower ends of the protruding pieces 19, 19 contact with the latching nails 22, 22, and the latching nails 22, 22 are moved to the side for approaching, against the biasing force of the coil spring 23, by means of a guiding effect of the tapered surfaces of the latching nails, and are allowed to pass the leading edges of the latching nails 22, 22, whereby the latching nails 22, 22 are allowed to return to the original positions by the biasing force of the coil spring 23, the protruding pieces 19, 19 are latched with the lower ends of the latching nails 22, 22 as shown in Fig. 10, and the upper end supporting member 4 is latched and fixed. By lifting up the upper end supporting member 4 from the latched state thereof, the protruding pieces 19, 19 push up the tapered surfaces of the latching nails 22, 22, whereby the latching nails 22, 22 are moved to the side for approaching, against the biasing force of the coil spring 23, the latching is released, and the upper section of the upper end supporting member 4 can be allowed to stand up so as to be in the lid-released position.

As shown in Fig. 4 and Fig. 5, the casing 3 comprises the base member 3A whose cross-sectional shape is in the form of "L" and which is used for attaching and supporting a cylindrical reel pipe 9 as a reel member for rolling up the screen 1, by means of an unshown spring, in a state in which the reel pipe 9 is biased in one rotating (rolling) direction, a front side upper plate portion 3B which is detachably latched with a front upper end of the base member 3A and extends upward so as to form a circular arc, a right and left pair of end portion caps 3C, 3C for closing opening portions formed on the right and left ends of the both base member 3A and front side upper plate portion 3B, and a portable handle 7 whose cross-sectional shape is in the form of "L" and which is attached to substantially the center in the traverse direction of the front surface of the base member 3A and extends forward. However, the configuration is not limited to the ones shown in the figures. A circular cap portion 3G embedded in a front end portion of each end portion cap 3C is pushed from the inner side to the outer side and detached, and an unshown screw is slackened by a driver which is inserted into an opening formed on the end portion cap 3C, whereby the front side upper plate portion 3B is detached, and the reel pipe 9 of the screen 1 can be easily detached, thus there is an advantage that the screen 1 can be replaced easily.

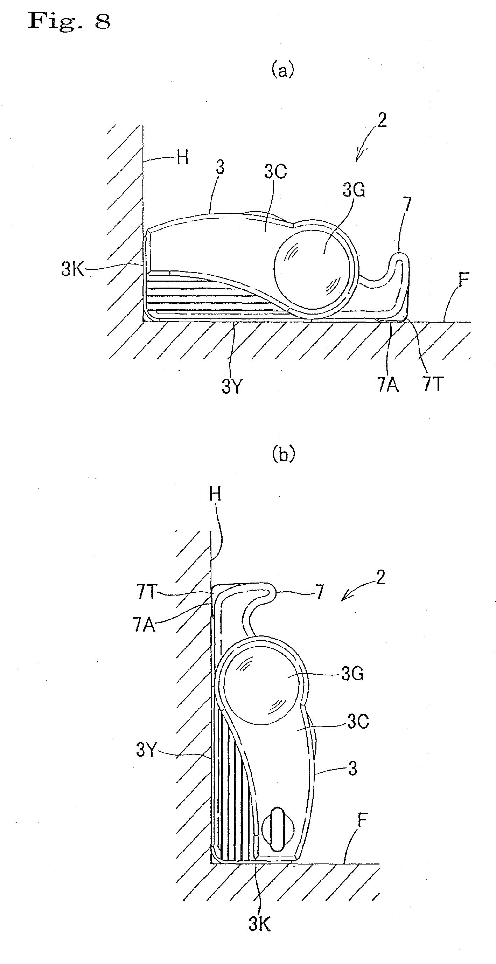

The casing 3 is configured such that the position thereof can be changed freely between an unused position in which a substantially flat rear surface 3K of the casing 3 contact with a floor surface F to allow the casing 3 to stand up such that a bottom surface 3Y thereof contacts with a wall surface H (or there may be a space therebetween) (see Fig. 8B), and a horizontally-used position in which the substantially flat bottom surface 3Y of the casing 3 contacts with the floor surface F to allow the screen 1 to stand up (see Fig. 8A, in which the rear surface 3K of the casing 3 is in contact with the wall surface in the figure, but there may be a space therebetween). In the horizontally-used position of the casing 3, the handle 7 protruding forward from the front surface of the casing 3 is configured such that a lower surface 7A (lower surface which is positioned at the most front part) of a protruding portion 7T and the bottom surface 3Y of the casing 3 contact with the floor surface F, the protruding portion 7T configuring a contact portion by protruding downward from a lower surface of the lower surfaces of the handle 7, which is in a section positioned on each of the right and left ends at the front end. In the case of the used position in which the screen 1 is allowed to stand up, the handle 7 can be combined with the contact portion which can reliably preventing the screen 1 from falling over, without disposing special supporting legs at the front and back of the casing 3. Here, the handle 7 is provided in substantially the center in the traverse direction of the casing 3, but the handle 7 can be provided in a position leaning toward either the right or left sides, or a plurality of handles 7 can be provided. In this configuration above, the protruding portion 7T is formed in the handle 7, the entire lower surfaces of the handle 7 may protrude downward so as to contact with the floor surface, or a protruding portion which is formed separately can be attached to the handle 7. The shape and size of the handle 7 do not have to be the ones shown in the figures. The casing 3 in which the vertical length thereof is longer than the front-to-back length of same when viewed from the side as shown in Fig. 8A is brought to the unused position in which the casing 3 is allowed to stand up as shown in Fig. 8B, whereby an installation space for the casing 3 on the floor surface F can be made smaller compared to the case of the horizontally-used position shown in Fig. 8A, producing an advantage in terms of the usage. At this moment, since the handle 7 faces upward, the handle 7 can be grabbed immediately and moved to other place. Here, the handle 7 and the pinch portion 6 are provided in the same section in substantially the center in the longitudinal direction of the casing 3, whereby there is an advantage that the elevating screen 2 can be moved by using the handle 7, and thereafter the pinch portion 6 can be pinched immediately to allow the screen 1 to stand up. However, the both pinch portion 6 and handle 7 may be disposed in different places.

As shown in Fig. 4, an end (upper end) of the screen 1 is fixed to a plate like latching piece 10 having the length substantially the same as the width of the screen 1, and the latching piece 10 is latched and held on the upper end supporting member 4, whereby the upper end of the screen 1 can be coupled to the upper end supporting member 4. However, they can be coupled to each other with different method.

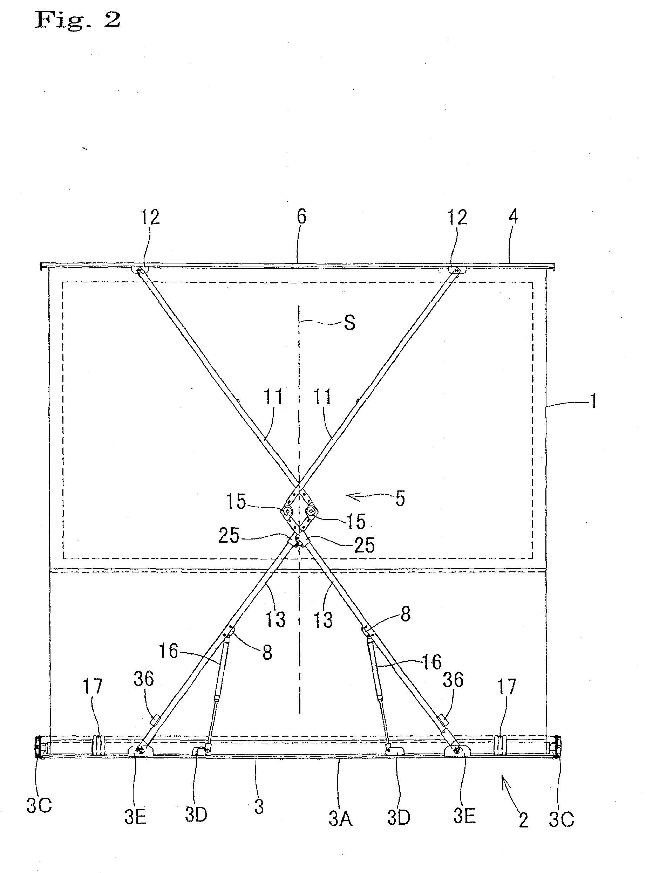

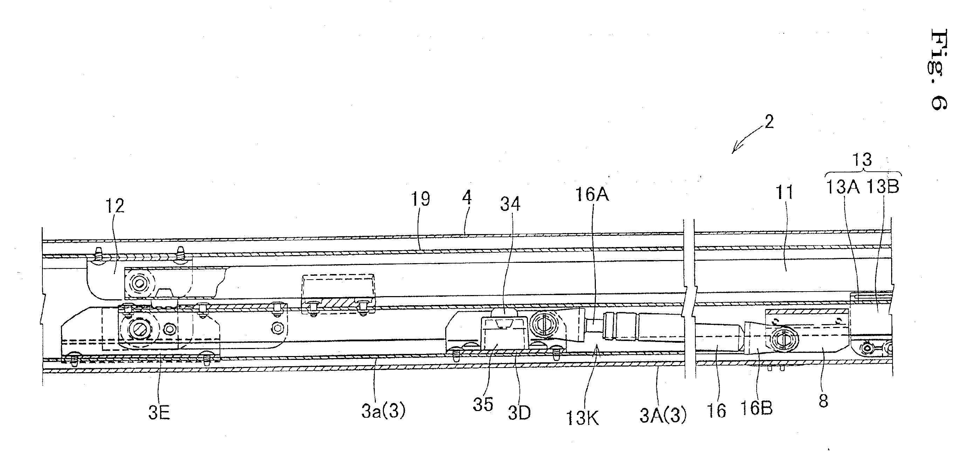

The X-shaped linkage 5 is described. As shown in Fig. 2 through Fig. 4, Fig. 6, Fig. 7, and Fig. 9, the both right and left end portions of the upper end supporting member 4 (or may be sections on substantially the center side which is slightly away from the both end portions, as long as they are in the periphery of the both end portions) are pivotally coupled with right and left upper ends of upper portion side arms 11, 11 via brackets 12, the upper portion side arms 11, 11 being in the form of a polygonal cylinder (or may be a circular cylinder or the like) and made of metal (or other material having the strength substantially the same as that of metal). Brackets 3E, 3E (may be combined with the base member 3A), which are fixed to specific two sections (sections in the vicinity of the right and left ends of the casing) between the front and back pair of protruding portions 3a, 3a having the shape of a hook and protruding upward throughout the entire casing 3 in substantially the longitudinal direction from a base member 3A, are pivotally coupled with lower ends of right and left lower portion side arms 13, 13, whose cross-sectional shapes having opened lower surfaces are in the shape of substantially a reversed "C" and which are made of metal (or other material having the strength substantially the same as that of metal). The lower ends of the right and left upper portion side arms 11, 11 and the upper ends of the right and left lower portion arms 13, 13 are pivotally coupled at the same side, whereby the X-shaped telescopic linkage 5 is configured. The upper ends of the upper portion side arms 11, 11 are pivotally coupled in the positions in the vicinity of the right and left ends of the upper end supporting member 4 as described above, there is an advantage that the screen 1 can be elevated more stably. However, according to the circumstances, the upper ends of the upper portion side arms 11, 11 may be pivotally coupled to the positions in the vicinity of the center in the traverse direction. Here, the lower portion side arms 13, 13 are configured such that the cross-sectional shapes thereof, which comprise a top plate portion 13A and a right and left pair of vertical plate portion (longitudinal plate portion) 13B, 13B hanging directly downward from both ends in the width direction (front-to-back direction) of the top plate portion 13A, are in the shape of substantially a reversed "C". However, the cross-sectional shape in which the lower surface and either the front or back vertical surfaces are opened may be in the shape of "L". Here, the X-shaped linkage 5 is shown, but the four arms may be pivotally coupled so as to form substantially a diamond shape. The numeral 34 shown in Fig. 6 is an elastic body (rubber) which contacts with the lower surfaces of the top plate portions 13A. 13A of the lower portion side arms 13, 13 when storing the lower portion side arms 13, 13, to regulate the positions of the elastic body, and at the same time to absorb impact sound generated when contacting with the lower surfaces. This elastic body 34 is provided, in a protruding fashion, on an upper end of a fixing member 35 which is attached via an after-mentioned bracket 3D fixed to between the front and back pair of protruding portions 3a, 3a. The numeral 36 shown in Fig. 9 is a receiving member for receiving the upper portion side arms 11, 11, and this receiving member 36 is screwed to the lower portion side arms 13, 13 with nuts.

To describe the above configuration specifically, the upper ends of the right and left upper portion side arms 11, 11 are pivotally coupled to the right and left end portions of the upper end supporting member 4 (or may be sections on substantially the center side which is slightly away from the both end portions, as long as they are in the periphery of the both end portions) such that the upper ends are shifted to the front and back so that they do not overlap with the right and left end portions when viewed in the traverse direction, the lower ends of the right and left lower portion side arms 13, 13 are pivotally coupled to the brackets 3E, 3E attached to the sections in the vicinity of the both right and left ends of the casing (or may be sections on substantially the center side which is slightly away from the both end portions, as long as they are in the periphery of the both end portions) such that the arms are shifted to the front and back so that they do not overlap with the brackets when viewed in the traverse direction, and the lower ends of the right and left upper portion side arms 11, 11 and the upper ends of the right and left lower portion side arms 13, 13 are pivotally coupled on the both sides via coupling members 15, 15 for reinforcement, which can be fitted externally, whereby the telescopic linkage 5 is configured.

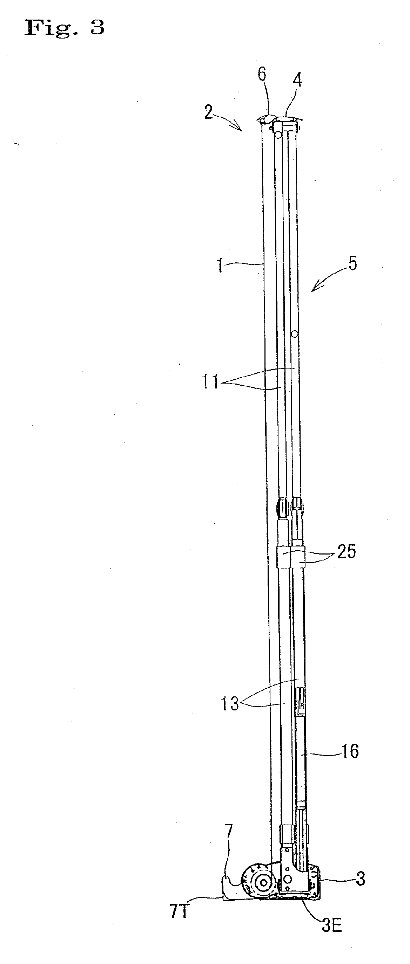

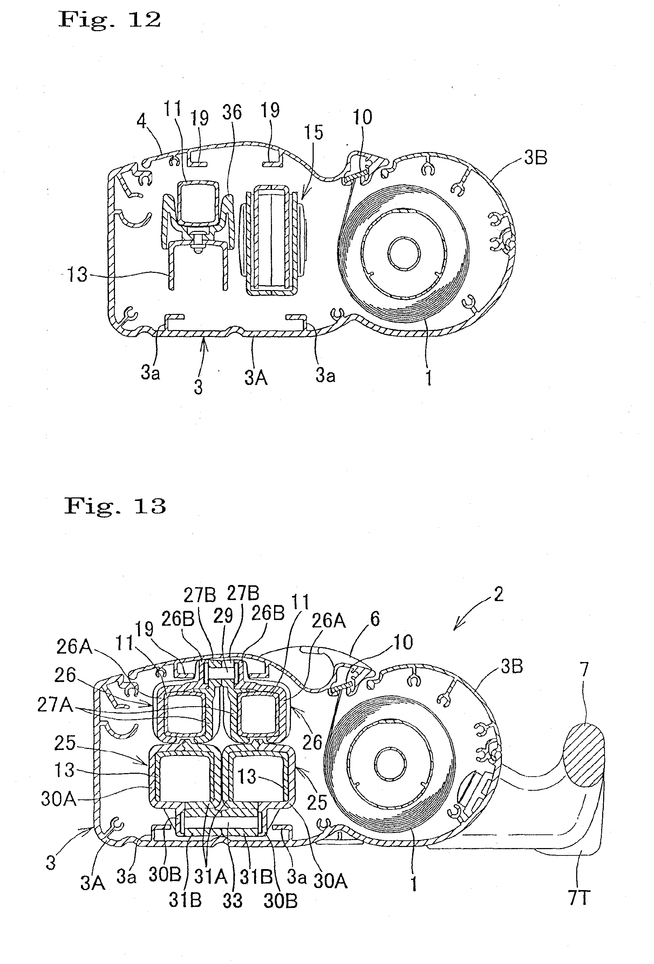

As shown in Fig. 2 and Fig. 3, two slide members 25 comprising a front and back pair of divided cases are attached to the right and left lower portion side arms 13, 13 respectively, and the right and let slide members 25, 25 are coupled to each other so as to be freely rotated alternately in a front-to-back direction and on a vertical perpendicular S positioned in substantially a center portion in the traverse direction, whereby the right and left linkage 5, 5 can be subjected to telescopic motion smoothly and stably. Moreover, there is an advantage that the positions of the upper ends of the screen 1 can be regulated by attaching the slide members 25. Here, the slide members 25, 25 are attached to the lower portion side arms 13, 13, but the slide members may be attached to the upper portion side arms 11, 11. Alternatively, as shown in Fig. 13 through Fit. 16, when attaching the slide members 25, 25, 26, 26 to the lower portion side arms 13, 13 and the upper portion side arms 11, 11, there is an advantage that a swing, which is caused by imbalance between the front and back occurring between the right and left upper portion side arms 11, 11 and the right and left lower portion side arms 13, 13, can be prevented.

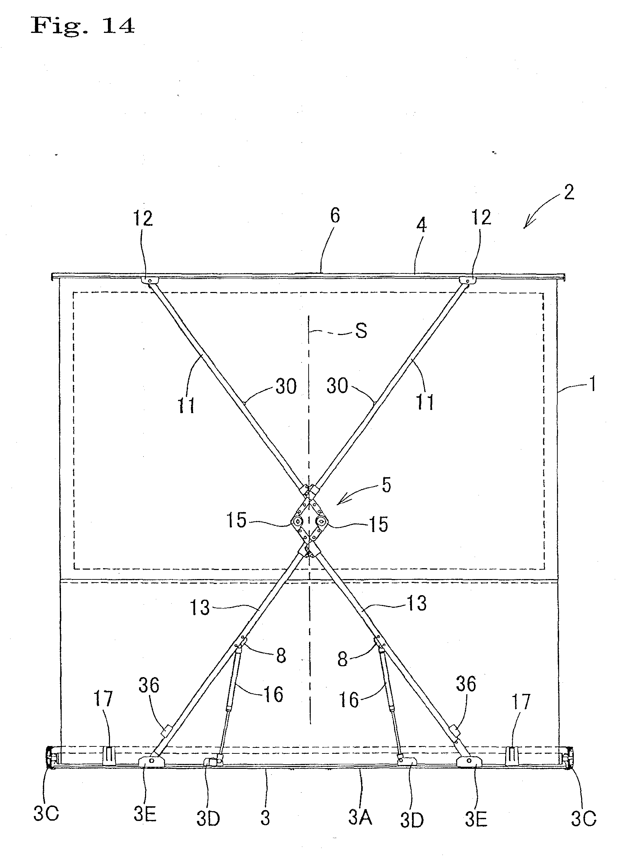

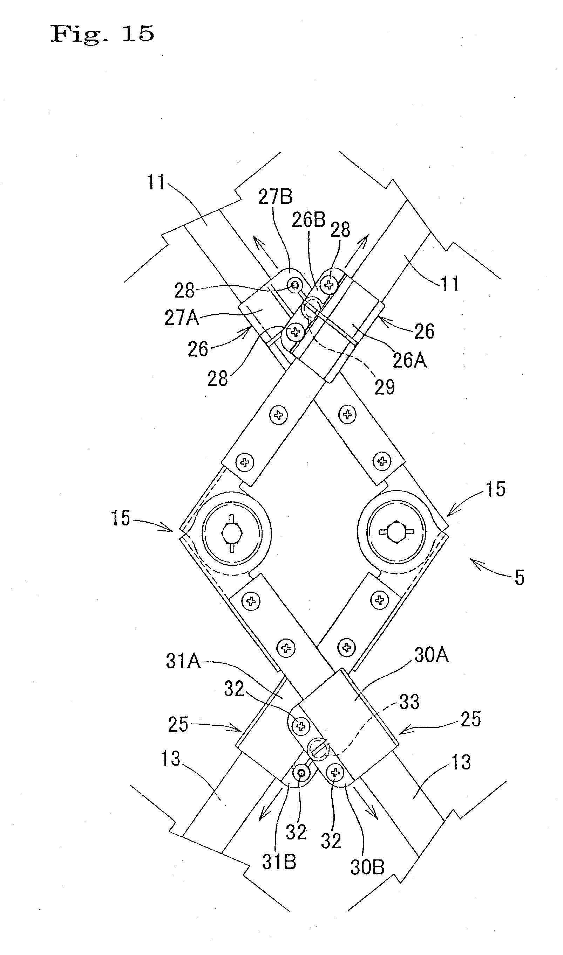

As shown in Fig. 13 and Fig. 15, one of the divided cases configuring the slide members 26 positioned on the upper portion comprises a case main body 26A in the form of substantially a reversed "C", which covers a portion slightly narrower than a half of the outer periphery of the upper portion side arm 11, and a coupling plate portion 26B extending upward from an upper end portion of the case main body 26A. The other one of the divided cases comprises a case main body 27A in the form of substantially a reversed "C", which covers a portion slightly narrower than a half of the outer periphery of the other upper portion side arm 11, and a coupling plate portion 27B extending upward from an upper end portion of the case main body 27A. The two of the case main bodies 26A, 27A are overlapped, and overlapped coupling plate portions 26B, 27B are fixedly coupled to each other by means of a pair of screws 28, 28, but they can be integrated by means of a latching mechanism, adhesive, or the like. Moreover, a substantially center in the traverse direction of the coupling plate portion 26B of the case main body 26A is caused to hold a pin 29 for pivotally coupling the slide members 26, 26 so as to be freely rotated alternately. Here, by using the pin 29, the slide members 26, 26 can be rotated alternately without causing much friction therebetween, but a component besides the pin 29 may be used. Therefore, as shown in Fig. 13, the slide members 26, 26 pivotally coupled via the pin 29 to each other rotatably are externally fitted to the upper portion side arms 11, 11 slidably, whereby, when switching the screen 1 from the used position to a storage position, the slide members 26, 26 are coupled such that the upper portion side arms 11, 11 are symmetrical at an arbitrary height, thus the right and left linkages 5, 5 can be constantly operated smoothly and stably. When the upper portion side arms 11, 11 are brought to the horizontal position which is the storage position, the slide members 26, 26 are brought to a free state in which the slide members 26, 26 can be moved freely. However, the slide members 26, 26 contact with protruding portions 30, 30 (see Fig. 14) provided in the upper portion side arms 11, 11, whereby the movement of the slide members 26, 26 can be stopped, and the slide members 26, 26 can be further maintained in the position where they have stopped (on the vertical perpendicular S). By regulating the positions of the slide members 26, 26 by means of the protruding portions 30, 30 as described above, when switching the screen 1 from the storage position to the used position there is an advantage that the position can be changed immediately without moving the slide members 26, 26 to predetermined positions (on the vertical perpendicular S), but the protruding portions 30, 30 can be omitted. The protruding portions 30, 30 are configured with rubber or the like, and, when the upper end supporting member 4 in the lid-closed position is applied with load for some reason, the upper end supporting member 4 can be received by the protruding portions 30, 30 provided on the upper surfaces of the upper portion side arm 11, 11, whereby the protruding portions 30, 30 can function as a cushion material.

In addition, one of the divided cases configuring the slide members 25 positioned on the lower portion comprises a case main body 30A in the form of substantially a reversed "C", which covers substantially a half of the outer periphery of the lower portion side arm 13 and substantially a half of the opening portion on the lower portion, and a coupling plate portion 30B extending downward from a lower end portion of the case main body 30A. The other divided case comprises a case main body 31A in the form of substantially a reversed "C", which covers substantially a half of the outer periphery of the other lower portion side arm 13 and substantially a half of the opening portion, and a coupling plate portion 31B extending downward from a lower end portion of the case main body 31A. The two of the case main bodies 30A, 31A are overlapped, and overlapped coupling plate portions 30B, 31B are fixedly coupled to each other by means of a pair of screws 32, 32, but they can be integrated by means of a latching mechanism, adhesive, or the like. Moreover, a substantially center in the traverse direction of the coupling plate portion 30B of the case main body 30A is caused to hold a pin 33 for pivotally coupling the slide members 25, 25 so as to be freely rotated alternately. Here, by using the pin 33, the slide members 25, 25 can be rotated alternately without causing much friction therebetween, but a component besides the pin 33 may be used. Therefore, as shown in Fig. 13, the slide members 25, 25 pivotally coupled via the pin 33 to each other rotatably are externally fitted to the lower portion side arms 13, 13 slidably, whereby, when switching the screen 1 from the used position to a storage position, the slide members 25, 25 are coupled such that the lower portion side arms 13, 13 are symmetrical at an arbitrary height, thus the right and left linkages 5, 5 can be constantly operated smoothly and stably. Then, as shown in Fig. 6, when the lower portion side arms 13, 13 are brought to the horizontal position which is the storage position, the slide members 25, 25 are brought to a free state in which the slide members 25, 25 can be moved freely. However, the slide members 25, 25 contact with attachment members 8, 8 (one of the attachment members is shown in the figure), which function as stopper members in the form substantially a reversed "C" and located on upper ends of gas springs 16, 16, whereby the movement of the slide members 25, 25 can be stopped, and the slide members 25, 25 can be further maintained in the position where they have stopped (on the vertical perpendicular S). By regulating the positions of the slide members 25, 25 by means of the attachment members 8, 8 as described above, when switching the screen 1 from the storage position to the used position there is an advantage that the position can be changed immediately without moving the slide members 25, 25 to predetermined positions (on the vertical perpendicular S), but the attachment members 8, 8 can be omitted. By combining the attachment members 8, 8 with the stopper members (position regulating members) of the slide members 25, 25, there is an advantage that the number of the members can be reduced, but other members may be used for configuration. Instead of using the pins 29, 33, there is an advantage that the angle in the front-to-back direction for allowing the screen 1 to stand up can be adjusted by configuring the slide members 25, 25 or the slide members 26, 26 such that the spaces between the slide members 25, 25 or the slide members 26, 26 are adjusted at the front and back.

Therefore, when storing the elevating screen 2 in the casing 3 after allowing the elevating screen 2 to stand up and extend, the upper end supporting member 4 is pushed down, whereby the linkages 5, 5 are operated easily. In other words, when the screen falls over such that the upper portion side arms 11, 11 and the lower portion side arms 13, 13 are brought to the horizontal position, the slide members 25, 25, 26, 26 slide (move) in a direction of an arrow shown in Fig. 15, while rotating in opposite directions with respect to each other so as to follow the swinging movement of the upper portion side arms 11, 11 and the lower portion side arms 13, 13. As a result, the slide members 25, 25, 26, 26 move to downward on the vertical perpendicular S, and the upper portion side arms 11, 11 and the lower portion side arms 13, 13 are caused to swing in the same angle by the slide members 25, 25, 26, 26, whereby the screen 1 can be pushed down stably. It should be noted that, when allowing the elevating screen 2 to stand up after storing it, the slide members 25, 25, 26, 26 slide (move) the upper portion side arms 11, 11 and the lower portion side arms 13, 13 in the opposite direction. As a result, the slide members 25, 25, 26, 26 move upward on the vertical perpendicular S, and the upper portion side arms 11, 11 and the lower portion side arms 13, 13 are caused to swing in the same angle by the slide members 25, 25, 26, 26, whereby the screen 1 can be allowed to stand up stably.

As shown in Fig. 2 through Fig. 4 and Fig. 6, the gas springs (or components with different configurations) 16, 16, which are the biasing means for moving and biasing (pushing and biasing) the lower portion side arms 13, 13 upward, are respectively attached between the attachment members 8, 8 attached to the substantially center portion in the longitudinal direction of the lower portion side arms 13, 13, and the brackets 3D, 3D fixed to the specific two sections (sections closer the center portion of the casing than the brackets 3E, 3E) between the front and back pair of protruding portions 3a, 3a, whereby the screen 1 can be dropped slowly, and at the same time the screen 1 can be held in a position at an arbitrary height.

Since the lower surface of the lower portion side arms 13, 13 are opened, the gas springs 16, 16 enter spaces 13K, 13K inside the lower portion side arms 13, 13 in a state in which the screen is stored, and are prevented from protruding downward from the longitudinal plate portions 13B, 13B. Here, the entire gas springs 16, 16 enter the spaces 13K, 13K inside the lower portion side arms 13, 13, whereby a space in the vertical direction inside the casing 3 can be compactified, thus such a configuration is preferred. However, only one of the gas springs 16, 16 may enter the spaces 13K, 13K inside the lower portion side arms 13, 13.

In the above storage state, the gas springs 16, 16 are disposed so as to be tilted forward so that the biasing direction (direction for pushing the lower portion side arms 13, 13 upward) of the gas springs 16, 16 is directed obliquely downward, but the gas springs 16, 16 may be disposed in a horizontal direction. By disposing the gas springs 16, 16 so as to be tilted forward, the upper end supporting member 4 is biased to the closing side, thus the upper end supporting member 4 can be reliably prevented from accidentally moving upward to cause the screen I to stand up.

Here, a fixed side base end portion 16B of the gas springs 16, 16 may be attached to the lower portion side arms 13, 13, and a movable side (telescopic side) leading end portion 16A may be attached to the bracket 3D, or vice versa. It is preferred that the gas springs 16, 16 are used as the biasing means, but a fluid pressure cylinder, coil spring, or the like may be used.

As described above, the entire gas springs 16, 16 enter the spaces 13K, 13K inside the lower portion side arms 13, 13, whereby a space in the vertical direction inside the casing 3 can be downsized, and, as shown in Fig. 4, when the four arms 11, 11, 13, 13 and the gas springs 16, 16 are disposed in the rear side space of the casing 3, and the screen 1 is rolled up and stored in the front side space of the casing 3, the vertical lengths can be made substantially equal in the front-to-back direction, and the center of gravity of the casing3 can be lowered. Further, in addition to the stable casing 3 in which the front-to-back length is longer than the vertical length, the handle 7 can be used as the contact portion, whereby the standing screen 1 can be reliably prevented from falling over.

## Claims

1. A self-standing elevating screen, wherein a reel member for rolling up and storing a screen which stands up is disposed in a front side space of spaces formed in a casing, a telescopic linkage, which is used for pivotally coupling upper end supporting member in which upper ends of the screen are coupled to each other and a base member provided inside the casing, is disposed in a back side space of the spaces formed inside the casing so as to be freely folded up and stored, the casing being configured so as to be freely changed between an unused position in which a rear surface of the casing contacts with a floor surface to allow the casing to stand up vertically, and a horizontally-used position in which a bottom surface of the casing contacts with the floor surface to allow the screen to stand up, a handle which protrudes forward from a front surface of the casing in the horizontally-used position is provided, and a contact portion, which can contact with the floor surface when the bottom surface of the casing is in contact with the floor surface, is provided in the handle.

2. The self-standing elevating screen according to claim 1, wherein the reel member is biased in order to rolling up the screen, the telescopic linkage is configured such that a top and bottom pair of links, which are configured by pivotally coupling a lower end of an upper portion side arm pivotally coupled to the upper end supporting member and an upper end of a lower portion side arm pivotally coupled to the base member, are distributed to the right and left of the self-standing elevating screen, a pivotally coupled portion of the lower portion side arm disposed on the same side as the upper portion side arm on the left side is disposed on a right side with respect to the center portion in a horizontal direction of the upper end supporting member, a pivotally coupled portion of the lower portion side arm disposed on the same side as the upper portion side arm on the right side is disposed ow a left side with respect to the center portion in a horizontal direction of the upper end supporting member, biasing means for moving and biasing the lower portion side arm upward is provided between the lower portion side arm and the base member, the lower portion side arm is configured such that the cross-sectional shape thereof, in which a lower surface thereof positioned on a lower side when the upper portion side arm and the lower portion side arm are folded up and stored in a vertical direction is opened, is in the shape of substantially a reversed "c" or in the shape of substantially a reversed "L", and the biasing means is disposed such that at least a part of the biasing means enters the space inside the lower portion side arm in a state in which the lower portion side arm is stored, and such that the part of the biasing means overlaps with an upper and lower plate portions of the lower portion side arm when viewed in the horizontal direction.

3. The self-standing elevating screen according to claim 2, wherein a gas spring is used as the biasing means.

4. The self-standing elevating screen according to claim 1, wherein the contact portion is formed integrally with the handle.

5. The self-standing elevating screen according to claim 1 or claim 4, wherein the handle is provided in substantially a center of the casing in a traverse direction.

6. The self-standing elevating screen according to any of claims 1 through 5, wherein an opening through which the screen and the linkage enter and exit is formed in the casing, and a lid member for closing the opening is configured by the upper end supporting member.

7. The self-standing elevating screen according to claim 6, wherein the casing is provided with a latching and holding member for closing the upper end supporting member serving as the lid member, so as to be latched with a latching portion of the upper end supporting member to hold the lid-closed position of the upper end supporting member.

8. The self-standing elevating screen according to claim 7, wherein the latching portion of the upper end supporting member comprises a pair of protruding pieces protruding so as to face each other in substantially a horizontal direction, the latching and holding member comprises a main body portion fixed to the casing and a pair of latching pieces movably provided on a side for approaching the main body portion, and the pair of latching pieces are provided with latching nails, which contact with the protruding pieces when the upper end supporting member is changed to the lid-closed position and move the pair of latching pieces to the side for approaching, return the pair of latching pieces to a side for separating and latch the protruding pieces so as to stop the vertical movement of the protruding pieces by means of release of the contact, which is caused by passage of the protruding piece, and further move the pair of latching pieces to the side for approaching when an upper part of the upper end supporting member, which is latched and held onto the lid-closed position, is changed to a lid-released position, and taper toward end portions which are opposite to the side for approaching, so as to release the latching with the protruding pieces.
